# NEW EUROPEAN PATENT SPECIFICATION

(11) **EP 1 445 294 B2**
(45) Date of publication and mention of the opposition decision: **11.04.2012**
(45) Mention of the grant of the patent: 20.07.2005
(21) Application number: 01965656.0
(22) Date of filing: 14.09.2001
(51) Int. Cl.: C09J 7/02

(54) **NOVEL EASILY STUCK ADHESIVE SHEET AND ITS MANUFACTURE METHOD**
NEUE, BESONDERS LEICHT ANZUBRINGENDE KLEBEFOLIE UND DEREN HERSTELLVERFAHREN
NOUVELLE FEUILLE ADHESIVE FACILE A COLLER ET SA PRODUCTION

(43) Date of publication of application: 11.08.2004
(73) Proprietor: Lintec Corporation, Tokyo 173-0001 (JP)
(72) Inventor: SAKURAI, Satoshi, Chiba-shi, Chiba 261-0001 (JP); TSUZUKI, Fumiaki, Odawara-shi, Kanagawa 256-0812 (JP)
(74) Representative: Gille Hrabal
(86) International application number: PCT/JP2001/008003
(87) International publication number: WO 2003/025079

(56) References cited:
- WO-A1-95/11945
- WO-A1-98/29231
- WO-A1-98/29516
- JP-A- 3 243 677
- JP-Y- 2 503 717
- JP-Y2- 2 503 717
- US-A- 3 301 741
- US-A- 5 296 277
- US-A- 5 795 636
- PATENT ABSTRACTS OF JAPAN vol. 0160, no. 33 (C-0905), 28 January 1992 (1992-01-28) & JP 3 243677 A (DAINIPPON PRINTING CO LTD), 30 October 1991 (1991-10-30)

## Description

### TECHNICAL FIELD

The present invention relates to an easily applicable adhesive sheet and a method for producing the same. More in particular, the invention relates to an easily applicable adhesive sheet which exhausts air easily at the time of application to an adherent, can be applied easily, re-applied easily, does not deteriorate the appearance of an adhesive sheet and is useful for application, particularly, as a large sized adhesive sheet such as an adhesive sheet for identification and decoration or an adhesive sheet for masking in coating, as well as a method for efficiently producing the same.

### BACKGROUND ART

Generally, an adhesive sheet comprises a substrate, an adhesive layer formed on the surface thereof and a release liner optionally disposed thereon and in a case when the release liner is disposed, the release liner is peeled off in use and the sheet is applied with the adhesive layer being in contact with an adherent.

However, in a case where the area of an adhesive sheet is large to some extent such as in an adhesive sheet for use in identification and decoration, an adhesive sheet for masking in coating and an adhesive sheet for surface protection of a metal plate and the like, air bubbles tend to be formed between the adhesive layer and the adherent and the portion is bulged to bring about a problem that the adhesive sheet can not easily be applied neatly to the adherent.

In order to solve the foregoing problem, various attempts have been made so far to provide the surface of the adhesive layer with air flow channel so as to remove air through the channel at the time of application and not to form air bubbles.

For example, there are proposed an adhesively fabricated sheet having an adhesive layer in which a number of small protrusions are distributed spotwise (Japanese Utility Model Registration Nos. 2503717 and 2587198), an easily applicable adhesive sheet having air flow channels on the adhesive surface (Japanese Unexamined Patent Application No. 223081/1988), an adhesive tape for use in photochemical processing having an adhesive layer in which groove forms capable of forming air flow channels are disposed (Japanese Unexamined Patent Application No. 248243/1994), and an adhesive sheet having an adhesive layer in which a plurality of protrusions and grooves between adjacent protrusions are formed (Japanese Unexamined Patent Application No. 209704/1999).

However, while the adhesive sheet and the adhesive tape described above can easily be applied on the adherent since air is easily removed at the time of application, they are not always completely satisfactory having drawbacks such that re-applying is difficult when an applying position is not correct and it is released again, and uneven structure or groove structure is raised on the surface of the substrate to deteriorate the appearance of the adhesive sheet after application.

### DISCLOSURE OF THE INVENTION

Under the situations described above, the invention intends to provide an easily applicable adhesive sheet which can easily exhaust air at the time of application to an adherent, can be applied easily and neatly with good adhesion, can easily be positioned upon re-applying, does not deteriorate the appearance of the adhesive sheet after application and is useful for application, particularly, as a large sized adhesive sheet.

The present inventors have made earnest studies for developing an easily applicable adhesive sheet having excellent functions as described above and formed that the foregoing object can be attained with an adhesive sheet having an adhesive layer in which spherical protrusions of a specified shape are disposed each at a predetermined distance to form air flow channels between adjacent protrusion. The invention has been achieved on the basis of such findings.

That is, the invention has the following gist:
(1) An easily applicable adhesive sheet having, on the surface of a substrate, an adhesive layer in which a plurality of spherical protrusions with the same diameters and the same heights, respectively, are disposed, with equal distances between the adjacent protrusions arranged symmetrically in six directions and an air flow channel is formed between each of adjacent protrusions, and the spherical protrusion in the adhesive layer has a diameter of from 50 to 300 µm, a height of 10 to 50 µm and the distance between the adjacent protrusions of 0 to 100 µm and the height is smaller than half of the diameter.
(2) The easily applicable adhesive sheet as defined in (1) above, wherein the thickness of the adhesive layer (distance from the surface of the substrate to the top of the spherical protrusion) is from 15 to 100 µm.
(3) A method for producing an easily applicable adhesive sheet as defined in (1) or (2), comprising:
   forming an adhesive layer on a releasably treated layer of a release liner in which the releasably treated layer having a shape-transfer face on the surface is provided; and
   superposing the substrate on the adhesive layer.

### BRIEF EXPLANATION OF THE DRAWWINGS

Fig. 1 is an explanatory view for the shape and the state of arrangement of a plurality of spherical protrusions disposed on an adhesive layer in an adhesive sheet according to the invention.
Fig. 2 is a cross sectional view for one example of an adhesive sheet according to the invention.
   - 1: Substrate
   - 2: Adhesive layer
   - 3: Spherical protrusion
   - 4: Release liner
   - 10: Adhesive sheet

### THE MOST PREFERRED EMBODIMENT TO CARRY OUT THE INVENTION

The adhesive sheet according to the invention has an adhesive layer in which a plurality of spherical protrusions each of a specified shape as defined in claim 1 are disposed on the surface of the substrate, and the substrate has no particular restriction and can be optionally selected and used from those used customarily as the substrate for the adhesive sheet.

The substrate can include, for example, paper such as woodfree paper, glassine paper, or coated paper, plastic sheets such as of polyesters (for example, polyethylene terephthalate and polyethylene naphthalate), polyolefins (for example, polypropylene, polyethylene), polyvinyl chloride, polyvinylidene chloride, polystyrene, polycarbonate, polyvinyl alcohol, polyurethane and acrylic resin, cellulosic sheets such as of cellulose triacetate, cellulose diacetate and cellophane. The thickness of the substrate may be determined properly depending on the purpose of use or the situation, which is within a range usually from 10 to 300 µm, preferably, from 50 to 150 µm.

There is no particular restriction for the adhesive forming the adhesive layer provided on the surface of the substrate and those customarily used for the adhesive layer of the adhesive sheet, for example, acrylic adhesives, rubber type adhesives or silicone type adhesives can be used.

In the adhesive sheet according to the invention, since a plurality of spherical protrusions each of a specified shape as defined in claim 1 are disposed at predetermined distance and an air flow channel is formed between each of the adjacent protrusions and air is removed through the air flow channel at the time of application, the sheet can be applied neatly in good adhesion with no occurrence of air bubbles.

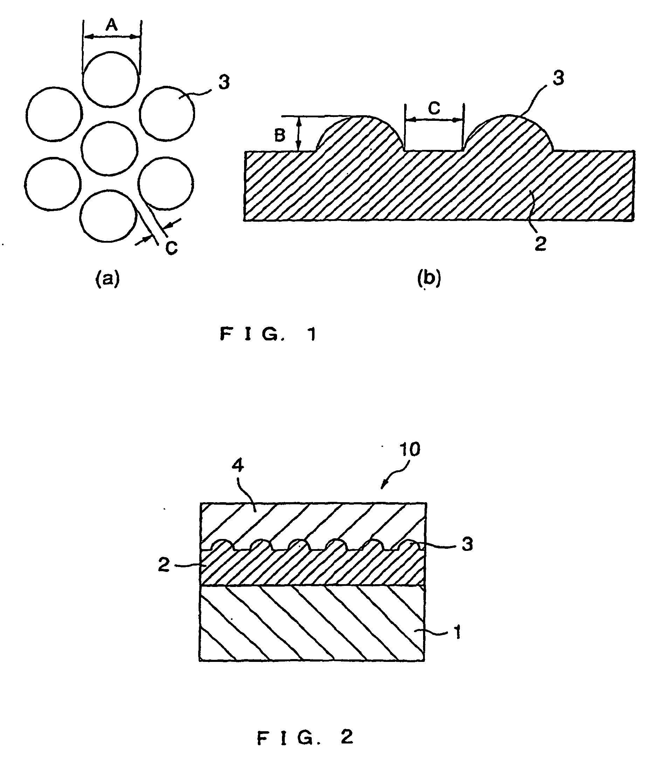

Fig. 1 is a plan view (a) and a side elevational view (b) for explaining the shape and the state of arrangement of a plurality of protrusions disposed on the adhesive layer in the adhesive sheet according to the invention. In the figure, A represents a diameter for the spherical protrusion, B represents a height for the protrusion and C represents a distance between adjacent protrusions.

In the invention, the spherical protrusion has a diameter A of from 50 to 300 µm and the height B is smaller than 1/2 of the diameter and within a range of 10 to 50 µm. When the diameter is less than 50 µm or the height is less than 10 µm, air is less removed when the adhesive sheet is applied on an adherent to form air bubbles, failing to attain the object of the invention. On the other hand, when the diameter exceeds 300 µm or the height exceeds 50 µm, this causes deterioration of the appearance due to raise of the uneven structure on the surface of the substrate after applying the adhesive sheet on the adherent. A preferred diameter for the spherical protrusion is within a range from 50 to 150 µm and a preferred height thereof is within a range from 15 to 40 µm.

Further, the distance C between the adjacent protrusions is within a range from 0 to 100 µm. When the distance exceeds 100 µm, air bubbles are formed and air can not be removed effectively after applying the adhesive sheet to the adherent, and dents are formed to the surface of the substrate after applying the adhesive sheet to the adherent to deteriorate the appearance and failing to attain the object of the invention. In a case where the distance C is 0 µm, adjacent protrusions are in contact with each other to provide a closest packing structure. A preferred distance C is within a range from 0 to 70 µm.

In the invention the spherical protrusions of an identical shape are arranged orderly for attaining the object of the invention. Further, by the provision of such protrusions on the adhesive layer, in a case where the adhesive sheet is lightly bonded to the adherent, since only the tops of the spherical protrusions are point-to-point adhered to the adherent, even when it is applied to an incorrect place, it can be easily peeled off and re-adhered again easily. That is, the positioning is facilitated.

The thickness of the adhesive layer in the adhesive sheet according to the invention (distance from the surface of the substrate to the top of the spherical protrusion) is selected within a range usually from 15 to 100 µm and, preferably, 15 to 50 µm.

For the method of producing the adhesive sheet according to the invention, any method can be used so long as it can provide an adhesive layer in which a plurality of spherical protrusions having the shape and the arrangement described above can be formed to the surface of the substrate. For example, (1) a method of providing an adhesive layer having a plurality of spherical protrusions on the surface of the substrate, such as screen printing, (2) a method of directly providing a planar adhesive layer on the surface of the substrate and then bringing the adhesive layer into contact with an emboss roll to form a plurality of spherical protrusions and (3) a method of transferring a shape formed on the releasably treated surface of a release liner to the surface of the adhesive layer and applying the substrate to the adhesive layer can be adopted, the shape-transfer method (3) being suitable in view of the operability.

In the shape-transfer method, a desired adhesive sheet can be manufactured by forming an adhesive layer on a releasably treated layer of a release liner in which the releasably treated layer having a shape-transfer face on the surface is provided and, subsequently, superposing a substrate on the adhesive layer. The release liner in which a releasably treated layer having a shape-transfer face on the surface is disposed can be manufactured, for example, by coating a releasing agent such as a silicone resin on a release liner substrate to dispose a releasably treated layer and applying shaping fabrication by a known method. An adhesive layer having the spherical protrusion as described above can be formed by transferring the releasably treated layer. There is no particular restriction for the release liner substrate used herein and any of those used customarily as the substrate for the release liner can be selected and used.

The substrate for the release liner can include laminate paper formed by laminating a thermoplastic resin such as polyethylene to paper such as woodfree paper and various types of plastic films.

In the method according to the invention, an adhesive sheet of the invention having a release liner is obtained by forming an adhesive layer on a releasably treated layer of a release liner which is disposed with a releasably treated layer having the shape transfer face on the surface and then superposing the substrate on the adhesive layer. Upon use, when the release liner is peeled off and the adhesive layer is placed on the adherent and applied while being pressed by a squeezer or a finger, since the space between adjacent protrusions form air flow channels to remove air and air bubbles are not formed, the sheet can be neatly adhered easily in good adhesion. Further, when the adhesive layer is lightly put to the adherent, point-to-point contact are established by the spherical protrusions to the adherent to enable positioning and the sheet can be adhered neatly in good adhesion to the adherent by strongly putting it after determining the position. Further, the appearance of the adhesive sheet after application is not deteriorated, for example, by raising of an uneven structure on the surface of the substrate.

Fig. 2 is a cross sectional view of an example of an adhesive sheet according to the invention, in which an adhesive sheet 10 has a structure where an adhesive layer 2 having a plurality of spherical protrusions 3 and a release liner 4 are laminated successively on the surface of the substrate 1.

### Example

Then, the invention is to be explained more specifically by way of examples but the invention is not limited to the examples.

### [Examples 1 to 6 and Comparative Examples 1 to 4]

Polyethylene was laminated by 30 µm on woodfree paper of 110 g/m², and a releasably treated layer of 0.5 µm thickness was formed by coating a silicone resin on the side of polyethylene to prepare a release liner and shape-transfer face was formed by embossing to the release liner on the side of the releasably treated layer. Then, after forming an adhesive layer of 30 µm thickness by an acrylic adhesive (PK, manufactured by LINTEC Co.) on the releasably treated layer of said release liner, a polyvinyl chloride substrate of 50 µm thickness (FP 5011, manufactured by LINTEC Co.) was superposed to the adhesive layer. Thus, an adhesive sheet with release liner having an adhesive layer provided with spherical protrusions as shown in Table 1 and Table 2 was obtained. In Comparative Example 1, after forming an adhesive layer on the releasably treated layer without forming the shape-transfer face on the release liner, the substrate was applied.

The following tests were conducted for the thus obtained adhesive sheets with the release liner. The results are shown in Table 1 and Table 2.

### (1) Adhesion

The adhesive layer surface of an adhesive sheet from which a release liner was peeled off was applied to a stainless steel plate and adhesion upon peeling after 24 hours at a rate of 300 mm/min in 180° direction was measured by using a tensile tester according to JIS Z0237. The environmental conditions were set at a temperature of 23°C and at a relative humidity of 50%RH. In the evaluation, 10 N/25 mm or more was determined satisfactory.

### (2) Air removability

On a melamine-coated iron plate (50 × 50 mm), an identical size adhesive layer surface of the adhesive sheet with a release liner was placed while peeling off the release liner and press sticked while slightly urging the periphery with a finger so as to form air bubbles at a central portion. It was urged so as to press out the air bubble portion by a squeezer to visually confirm the removed state of air.

### (3) Deformation of the substrate surface

It was visually confirmed whether unevenness developed or not on the surface of the substrate of the adhesive sheet for which air release was confirmed in (2) above.

### (4) Swelling after heating

The adhesive sheet for which the deformation on the surface of the substrate was confirmed in (3) above was left in a thermostable vessel at 80°C for 30 min and then it was visually confirmed whether swelling was caused or not on the surface of the substrate.

**Table 1**

| | Example 1 | Example 2 | Example 3 | Example 4 | Example 5 | Example 6 |
|---|---|---|---|---|---|---|
| Diameter of spherical protrusion (µm) | 100 | 100 | 50 | 150 | 100 | 100 |
| Height of protrusion (° ) | 20 | 20 | 20 | 20 | 15 | 20 |
| Distance between protrusions (µm) | 50 | 20 | 40 | 40 | 40 | 70 |

| Results | | | | | | |
|---|---|---|---|---|---|---|
| Adhesion | ○ | ○ | ○ | ○ | ○ | ○ |
| Air removability | ○ | ○ | ○ | ○ | ○ | ○ |
| Deformation on substrate surface | ○ | ○ | ○ | ○ | ○ | ○ |
| Swelling after heating | ○ | ○ | ○ | ○ | ○ | ○ |
| Evaluation method ○: good × : poor | | | | | | |

**Table 2**

| | Comparative Example 1 | Comparative Example 2 | Comparative Example 3 | Comparative Example 4 |
|---|---|---|---|---|
| Diameter of spherical protrusion (µm) | none | 30 | 400 | 100 |
| Height of protrusion (° ) | none | 20 | 20 | 20 |
| Distance between protrusions (µm) | none | 40 | 40 | 150 |

| Results | | | | |
|---|---|---|---|---|
| Adhesion | ○ | × | × | × |
| Air removability | × | × | ○ | × |
| Deformation on substrate surface | ○ | ○ | × | × |
| Swelling after heating | × | ○ | ○ | ○ |
| Evaluation method ○: good × : poor | | | | |

### INDUSTRIAL APPLICABILITY

The invention can provide an adhesive sheet capable of easily applying neatly in good adhesion under easy removal of air at the time of application to an adherent easy positioning by re-applying and not deteriorating the appearance of the adhesive sheet after application.

The adhesive sheet according to the invention is suitable, particularly, as a large-size adhesive sheet such as adhesive sheet for use in identification and decoration adhesive sheet for masking in coating and adhesive sheet for surface protection of metal plate and the like.

## Claims

1. An easily applicable adhesive sheet having, on the surface of a substrate, an adhesive layer,
in which a plurality of spherical protrusions with the same diameters and the same heights, respectively, are disposed, with equal distances between the adjacent protrusions arranged symmetrically in six directions and an air flow channel formed between each of adjacent protrusions, and the spherical protrusions in the adhesive layer having a diameter of from 50 to 300 µm, a height of 10 to 50 µm and a distance between the adjacent protrusions of 0 to 100 µm,
and the height is smaller than half of the diameter.

2. The easily applicable adhesive sheet according to claim 1, wherein the thickness of the adhesive layer (distance from the surface of the substrate to the top of the spherical protrusion) is from 15 to 100 µm.

3. A method for producing an easily applicable adhesive sheet as described in claim 1 or 2, comprising:
forming an adhesive layer on a releasably treated layer of a release liner, in which the releasably treated layer is provided with a shape transfer face on the surface; and
superposing the substrate on the adhesive layer.

## Patentansprüche

1. Eine leicht aufzubringende mit einer Klebeschicht auf der Oberfläche eines Substrats,
wobei der Klebeschicht eine Vielzahl von kugelförmigen Vorsprüngen mit jeweils denselben und denselben Höhen angeordnet ist, wobei gleiche Abstände zwischen den benachbarten Vorsprüngen symmetrisch in sechs Richtungen angeordnet sind und ein Luftströmungskanal jeweils zwischen benachbarten Vorsprüngen ausgebildet wird, und die kugelförmigen vorsprünge in der Klebeschicht einen von 50 bis 300 µm, eine von 10 bis 50 µm und einen Abstand zwischen benachbarten Vorsprüngen von 0 bis 100 µm aufweist,
und die Höhe ist als die Hälfte des Durchmessers.

2. Die leicht aufzubringende Klebefolie gemäß Anspruch 1, wobei die Dicke der Klebeschicht (Abstand von der Oberfläche des Substrats zur Spitze des kugelförmigen Vorsprungs) 15 bis 100 µm beträgt.

3. Verfahren zur Herstellung einer leicht aufzubringenden Klebefolie, wie in einem der Ansprüche 1 oder 2 angegeben, umfassend:
Ausbildung einer Klebeschicht auf einer ablösbarmachend behandelten Schicht einer Abdeckschicht, in der die ablösbarmachend behandelte schicht mit einer Form übertragenden Stirnseite auf der Oberfläche bereit gestellt wird; und
Übereinanderlagern des Substrats auf die Klebeschicht.

## Revendications

1. Feuille adhésive facile à appliquer présentant, à la surface d'un substrat, une couche adhésive,
sur laquelle une pluralité de parties sphériques en relief ayant les mêmes diamètres et les mêmes hauteurs est disposée à égale distance entre les parties sphériques en relief adjacentes arrangées symétriquement dans six directions et un canal d'écoulement d'air est formé entre chacune des parties en relief adjacentes, et les parties sphériques en relief de la couche adhésive ayant un diamètre de 50 à 300 µm, une hauteur de 10 à 50 µm et les parties en relief adjacentes étant espacées de 0 à 100 µm,
et la hauteur est inférieure à la moitié du diamètre,

2. Feuille adhésive facile à appliquer selon la revendication 1, dans laquelle l'épaisseur de la couche adhésive (distance entre la surface du substrat et le sommet de la partie sphérique en relief) est comprise entre 15 et 100 µm.

3. de production d'une feuille adhésive facile à appliquer selon la revendication 1 ou 2, comprenant :
la formation d'une couche adhésive sur une couche, traitée pour être décollable, d'une pellicule décollable, dans laquelle la couche traitée pour être décollable présente à la surface une face à transfert de forme ; et
la superposition du substrat sur la couche adhésive.
